# EUROPEAN PATENT APPLICATION

(11) **EP 1 717 545 A1**
(43) Date of publication of application: **02.11.2006**
(21) Application number: 06112042.4
(22) Date of filing: 30.03.2006
(51) Int. Cl.: G01B 5/28, G01B 21/30

(54) **Surface roughness/contour profile measuring instrument**

(30) Priority: 28.04.2005 JP 2005132778
(71) Applicant: TOKYO SEIMITSU CO.,LTD., Mitaka-shi Tokyo 181-8515 (JP)
(72) Inventor: Aoki, Yuya, Tokyo (JP)
(74) Representative: Skone James, Robert Edmund

(57) **Abstract**

A surface roughness/contour profile measuring instrument (1) capable of automatic movement of a pickup to a measurement position has been disclosed. The surface roughness/contour profile measuring instrument comprises a pickup (7) and a pickup moving mechanism and measures the surface roughness or the contour profile of the surface of a work, and further comprises a movement information generation section (16) for generating movement information necessary to move the pickup from the current position to the measurement position for detecting the height of a surface position on the work surface and a movement control section for relatively moving the pickup with respect to the work based on the movement information generated by the movement information generation section.

## Description

### BACKGROUND OF THE INVENTION

The present invention relates to a surface roughness/contour profile measuring instrument and, more particularly, to a surface roughness/contour profile measuring instrument having an improved ability to cause a contact probe to come into contact with a measurement part of a work.

The surface roaghness/contour profile measuring instrument measures the surface roughness or the contour profile of a work by moving a pickup having a contact probe along the surface of a work, converting the amount of displacement of the pickup into an electric signal, and reading the displacement using a calculating machine such as a computer. Such a configuration is disclosed in, for example, Japanese Unexamined Patent Publication (Kokai) No. 2002-107144. Fig.1 shows a basic configuration of a conventional surface roughness/contour profile measuring instrument.

A surface roughness/contour profile measuring instrument 1 has a pickup 6 for measuring the surface roughness of a work placed on a table 2 and the pickup 6 is supported by a holder 5 to be fixed on a drive section 4.

The pickup 6 has a contact probe 7 at its front end and the amount of displacement of the contact probe 7 is converted into a voltage by a differential transformer (not shown) built in the pickup 6. The voltage value is converted into a digital signal by an A/D converter and inputted to a data processing device (not shown) such as a computer. Due to this, measurement data indicating the surface roughness of a work is acquired by the data processing device.

By the way, there may be a case where the amount of displacement of the contact probe 7 is detected using a differential inductance or laser interferometer instead of a differential transformer. Further, there may also be a case where the surface position is detected in a no-contact manner by utilizing an optical method etc. without using a contact probe. Here, an explanation is given of a configuration in which the amount of displacement of the contact probe 7 is detected by a differential transformer is taken as an example. However, the present invention is not limited to this and the height of a surface position may be detected by any method as long as the instrument is a surface roughness/contour profile measuring instrument.

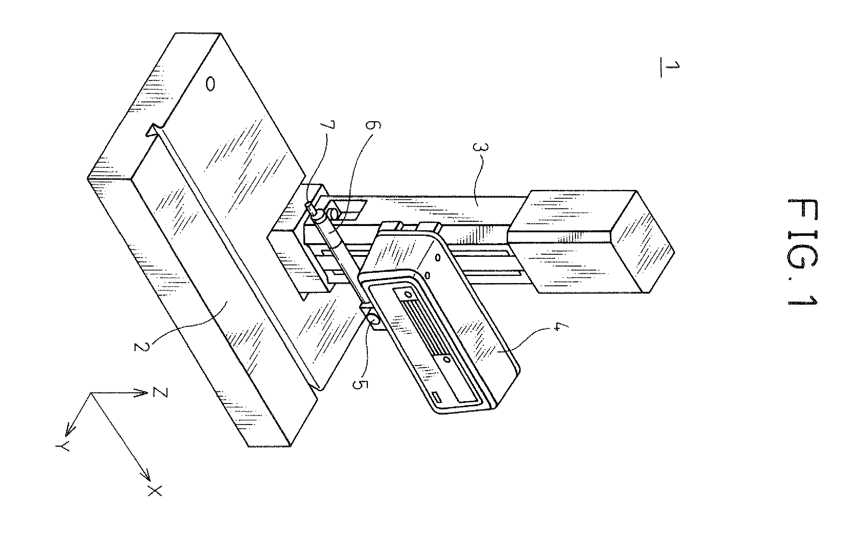

As shown in Fig.1, the drive section 4 is attached to a column 3 erected on the table 2 and by driving a motor in accordance with directions from the above-mentioned data processing device, it is possible for the drive section 4 to move the holder 5 in the transverse direction (X direction), which is one of the predetermined directions on the table surface on which a work is placed, and it is also possible to move the whole drive section 4 along the column 3 in the vertical direction (Z direction) perpendicular to the table surface in accordance with the height of a work. Further, it is possible to move the column 3 in the longitudinal direction (Y direction), which is one of the predetermined directions on the table surface. As described above, it is possible for the pickup 6 to move in the three (X, Y and Z) directions. There may be a case where movement in the three directions is made possible by mounting a Y-axis drive unit for moving a work in the Y direction on the table 2. Further, there may be a case where three-dimensional movement is realized by combining rotational movement, in addition to translational movement. In either case, it is possible to move the pickup 6 three-dimensionally by operating an operation section (not shown).

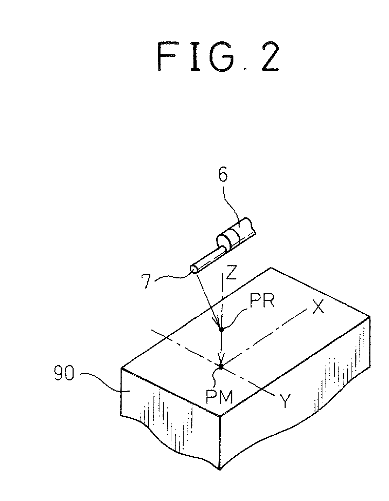

When performing measurement, an operator places a work on the table 2, operates the operation section to move the pickup 6 with respect to the work, and causes the contact probe 7 to come into contact with a position to be measured (a measurement position) on the work surface. Fig.2 is a diagram for explaining an operation for causing the contact probe 7 to come into contact with a measurement position of a work. In Fig.2, PM is a measurement position on a work 90 and, after causing the contact probe 7 to come into contact with the measurement position PM, and in a state in which the contact probe 7 is in contact with the surface of the work 90, measurement is performed by moving the pickup 6 in the X-axis direction. Here, the direction of displacement of the contact probe 7 is referred to as the detection direction of the pickup 6 and, when causing the contact probe 7 to come into contact with the surface of the work 90, the contact probe 7 is put close thereto by moving it in the detection direction of the pickup 6. In the case of a non-contact type pickup, the pickup moves so as to enter a state of measuring the height of a measurement position. Here, a state in which the pickup measures the height of the measurement position of the work surface is referred to as a measurement directed position. Therefore, when there is provided a contact probe, a state in which the contact probe is in contact with the measurement position of the work surface is referred to as a measurement directed position.

In order to cause the contact probe 7 to come into contact from the position shown in Fig.2, an operator operates the operation section and moves the contact probe 7 from the current position to a position PR on the Z-axis passing through the measurement position PM. Then, if a contact operation is directed, the pickup 6 starts to descend at a predetermined speed, the contact probe 7 comes into contact with the surface of the work 90, and when a detected signal reaches a predetermined value, the descent of the pickup 6 stops. In this state, if measurement is directed, the pickup 6 starts to move in the X-axis direction. The operator performs an operation to move the contact probe 7 to the position PR while watching the contact probe 7 and the work 90. Therefore, the coordinates of the position PR and the distance between the position PR and the contact position PM are set visually by the operator.

As described above, the movement of the contact probe 7 from the position PR to the measurement position PM is stopped after the contact probe 7 comes into contact with the surface of the work 90, as detected by monitoring the detected signal and, therefore, the movement speed at this time cannot be increased too much. Particularly, it is necessary to limit the movement speed of the pickup 6 that detects fine bumps and dips to low speed because the range of displacement (detection possible rage) of the contact probe 7 is narrow.

This operation is the same when the surface position is detected in a non-contact manner such as an optical method, and the pickup is moved toward the surface at low speed and when the pickup is brought into a measuring state, the movement of the pickup is stopped.

Conventionally, such a surface roughness/contour profile measuring instrument is used for evaluation of the brilliance of a painted surface, evaluation of surface properties of a film, measurement of the flatness of a liquid crystal painted film surface, etc., and excellent operability has been an important challenge.

### SUMMARY OF THE INVENTION

As described above, in the surface roughness/contour profile measuring instrument, the operation for causing the contact probe to come into contact with the contact position of a work, that is, the operation to cause the pickup to move to the measurement directed position is performed by an operator. Because of this, when measuring the surface roughness/contour profile of plural lines of a work, it is necessary for the operator to perform an operation to cause the contact probe to come into contact with the next contact position of the work (an operation to move the pickup to the next measurement directed position) when measurement of each line is completed. Therefore, there is a problem in that it is necessary for the operator to always stay by the surface roughness/contour profile measuring instrument during the period of measurement to monitor the measurement, preventing the operator from doing other work in the meantime. Because of this, automation of the contact operation of a contact probe (moving operation of a pickup) in a surface roughness/contour profile measuring instrument is demanded.

Further, an operator visually judges that the pickup 6 is at the position PR, and there is a trend that the distance from the position PR to the contact position PM is increased because the contact probe 7 is hard to see and it is necessary to prevent the contact probe 7 from coming into contact with the surface of a work. If the distance is increased, as described above, it is necessary to move the contact probe 7 from the position PR to the contact position PM in Fig.2 at low speed and there is a problem in that the operation time is lengthened. Further, as the contact probe 7 is hard to see, there may be a case where movement of the contact probe 7 is stopped at a position shifted from the Z-axis passing through the contact position PM. In this case, the actual contact position of the contact probe 7 is shifted from the desired contact position and if the shift is large, it becomes necessary to perform contact operation of the contact probe 7 again.

In the case of a non-contact type pickup, it is difficult to judge the measurement position and the above-mentioned problem becomes more remarkable in the case of a non-contact type pickup.

As for a three-dimensional coordinate measuring instrument, as described in, for example, Japanese Unexamined Patent Publication (Kokai) No. 10-239042, various control methods for moving and causing a contact probe to come into contact with a work are proposed and a device for automatically setting a movement path of a contact probe is also proposed. However, the contact probe of the coordinate measuring instrument has a larger detection possible range than that of the contact probe of a surface roughness/contour profile measuring instrument and the current state is that the automatic movement contact technique of the contact probe in the coordinate measuring instrument is difficult to apply to a surface roughness/contour profile measuring instrument. Because of this, a surface roughness/contour profile measuring instrument that automatically moves and causes a contact probe to come into contact with a work (movement of a pickup to a measurement directed position) has not been realized so far.

Further, the technique of the movement path automatic setting of a contact probe in a coordinate measuring instrument is premised on the use of the function of the coordinate measuring instrument for measuring the coordinates of a complex three-dimensional form, therefore, an operator is able to set a complex path easily. In contrast to this, a surface roughness/contour profile measuring instrument assumes that the above-mentioned operation is performed by an operator and, therefore, it does not have the function of performing a complex movement in the three-dimensional space or the function of easily setting such a path. Because of this, a technique capable of easily performing the movement path automatic setting of a pickup in a current surface roughness/contour profile measuring instrument is demanded.

The above-mentioned problems being taken into consideration, the present invention has been developed and an object thereof is to realize a surface roughness/contour profile measuring instrument capable of automatically moving a pickup to a measurement directed position.

A surface roughness/contour profile measuring instrument of the present invention comprises a pickup for detecting the height of the surface position of a work and a pickup moving mechanism for relatively moving the pickup with respect to the work, wherein by detecting the change in the height of the surface position of the work when relatively moving the pickup with respect to the surface of the work, the surface roughness or the contour profile of the work is measured and, in order to realize the above-mentioned object, the surface roughness/contour profile measuring instrument further comprises a movement information generation section for generating movement information necessary to move the pickup from the current position to a measurement directed position for detecting the height of a directed surface position of the work surface and a movement control section for relatively moving the pickup with respect to the work based on the movement information generated by the movement information section.

The movement information generation section comprises a movement path generation section for generating a path along which the pickup moves from the current position to a contact position of the contact probe and a movement speed information generation section for determining the speed at the time of movement along the path generated by the movement path generation section.

The movement path generation section generates a path based on the measurement position, the detection direction of the pickup, the current position of the pickup, information as to whether the pickup is in a measuring state, a safe distance set in advance, and information as to a safe range set in advance. There are various methods for generating a path. Examples are described below.

The movement path generation section generates a path along which a pickup moves to a measurement position after moving from a measurement directed position to a position on a straight line extending in the detection direction of the pickup.

The movement path generation section generates a path such that the pickup passes through a reference position a safe distance away from the measurement directed position in the detection direction of the pickup.

The movement path generation section generates a path such that the pickup moves to the reference position after ascending to the height of the reference position when the current position of the pickup is lower than the reference position in the detection direction of the pickup.

The movement path generation section generates a path such that the pickup moves to the reference position after ascending to a safe distance in the detection direction of the pickup when the pickup is in the measuring state.

The safe range is, for example, a cone with the reference position being the vertex and the detection direction of the pickup being the axis.

In the safe range, the movement path generation section generates a path such that the contact probe moves on a straight line to the reference position.

The movement speed information generation section sets the movement speed of the pickup so as to be slow on the path for the movement from the reference position to the measurement directed position and to be fast on the rest of the path.

In the surface roughness/contour profile measuring instrument of the present invention, if the safe distance and the safe range are set in advance and the measurement position and the detection direction of the pickup are set for each work, the current position of the pickup and information as to whether the pickup is in the measuring state can be obtained from the measuring instrument, therefore, the operation to move the pickup to the measurement directed position can be performed automatically. Plural settings can be done for the measurement position and the detection direction of the pickup and the measuring operation in accordance with each setting value is performed sequentially.

A generated path consists of only the movement of the pickup in the detection direction (Z direction) and the movement in the direction perpendicular to that (movement in the X-Y plane) outside the safe range, and a path can be generated easily. Further, outside the safe range, the pickup does not move in the direction perpendicular to the detection direction of the pickup in a state of being lower in height than the reference position, therefore, collision of the contact probe with a work can be avoided.

According to the surface roughness/contour profile measuring instrument of the present invention, by only doing a predetermined simple setting, it is possible to automatically perform the operation to move the pickup to the measurement directed position.

### BRIEF DESCRIPTION OF THE DRAWINGS

The features and advantages of the invention will be more clearly understood from the following descriptions taken in conjunction with the accompanying drawings in which:
Fig.1 is a diagram showing an external view of a surface roughness/contour profile measuring instrument;
Fig.2 is a diagram for explaining a contact operation of a contact probe in a prior example;
Fig.3 is a diagram showing a configuration of a surface roughness/contour profile measuring instrument in an embodiment of the present invention;
Fig.4 is a basic flow chart of a contact operation of a contact probe in an embodiment;
Fig.5 is a diagram for explaining a contact operation of a contact probe in an embodiment;
Fig.6 is a flow chart showing details of a contact operation of a contact probe in an embodiment; and
Fig.7 is a diagram for explaining a modification example of a contact operation of a contact probe in an embodiment.

### DESCRIPTION OF THE PREFERRED EMBODIMENTS

A surface roughness/contour profile measuring instrument in an embodiment of the present invention is explained below. The surface roughness/contour profile measuring instrument in the embodiment is capable of moving a pickup three-dimensionally as shown in Fig.1, however, the present invention is not limited to this and can be applied to an instrument capable of moving a pickup two-dimensionally. Further, it is only necessary to be capable of relatively moving a pickup two- or three-dimensionally with respect to a work, and it is also possible to realize part of movement by moving the work and to realize movement by rotational movement not only by translational movement.

Further, the present invention can also be applied to a surface roughness/contour profile measuring instrument having a pickup of a type that detects the surface position in a non-contact manner such as an optical method etc.

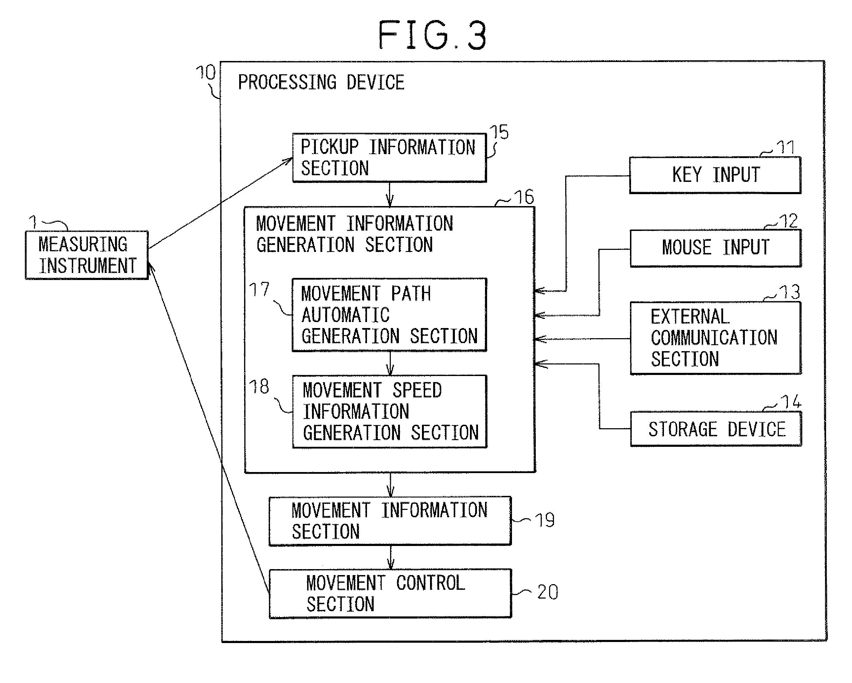

Fig.3 is a diagram showing a configuration of a surface roughness/contour profile measuring instrument in an embodiment. The surface roughness/contour profile measuring instrument in the embodiment comprises a measuring instrument 1 corresponding to the surface roughness/contour profile measuring instrument shown in Fig.1 and a processing device 10 for automatically performing processing by which a contact probe 7 is caused to come into contact with the measurement position of a work. The processing device 10 comprises a key input 11 and mouse input 12 for inputting a measurement position etc., an external communication section 13 to communicate with a host computer etc., a storage device 14, a pickup information section 15 for receiving information as to the position of a pickup (that is, a contact probe) and information as to whether the pickup is in a measuring state (that is, the contact probe is in a contact state) from the measuring instrument 1, a movement information generation section 16, a movement information section 19 for storing the movement information generated by the movement information generation section 16, and a movement control section 20 for controlling the movement of the pickup in the measuring instrument 1 such that the contact probe is caused to come into contact with the measurement position of the work surface based on the movement information stored in the movement information section 19. The processing device is realized by a computer system.

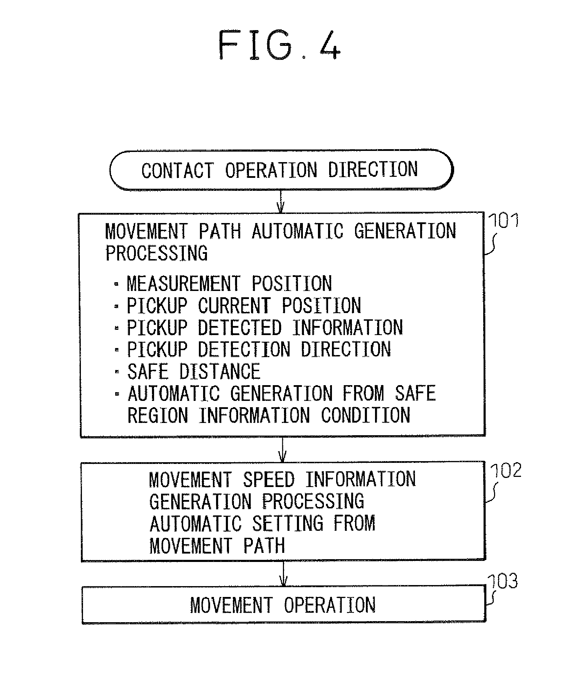

Fig.4 is a flow chart showing the outline of processing of the processing device 10 for causing the contact probe 7 to come into contact with the measurement position of a work. When a contact operation to cause the contact probe 7 to come into contact with the measurement position of a work is directed, movement path automatic generation processing 101 for automatically generating a movement path is performed, movement speed information generation processing 102 for determining the speed on the generated movement path is performed, and a movement operation 103 is performed based on the generated movement path and speed.

The movement path automatic generation processing 101 automatically generates a path based on the measurement position on the work, the current position of the pickup, the pickup detected information indicating whether the contact probe is in a contact state, the detection direction of the pickup, the safe distance set in advance, and the safe region information indicating the safe range set in advance. The safe distance and the safe region information are inputted to the movement information generation section 16 by utilizing the key input 11, the mouse input 12, and the external communication section 13. The inputted safe distance and the safe region information are stored in the storage device 14. Further, the measurement position and the detection direction of the pickup are set for each work by utilizing the key input 11, the mouse input 12, the external communication section 13, etc., and stored in the storage device 14. By the way, there may be a case where the pickup itself has the function of judging the detection direction, and in this case, the setting of the detection direction is not necessary if the orientation of the surface is known. It is possible to set plural measurement positions by assigning numbers in order and an operation to perform measurement of one line by causing the contact probe to come into contact with the contact position is performed for the specified contact position in the specified order. It is also possible for an operator to perform an operation to move and cause the contact probe to come into contact with the measurement position to cause the position to be stored as a measurement position, and to perform the measurement operation and the movement to the measurement position sequentially in an automatic manner. Further, the detection direction of the pickup is set in accordance with the orientation of the surface of the measurement position. The positional relationship between the coordinate system for moving the contact probe and the actual work surface is performed by setting in the coordinate system the position of the contact point in a state in which the contact probe is caused to come into contact with the work surface by the operation of an operator as before.

The current position of the pickup and the pickup detected information are generated in the measuring instrument 1 and inputted to the movement information generation section 16 via the pickup information section 15.

The movement speed information generation processing 102 automatically sets the speed on the path based the generated path and the safe region information.

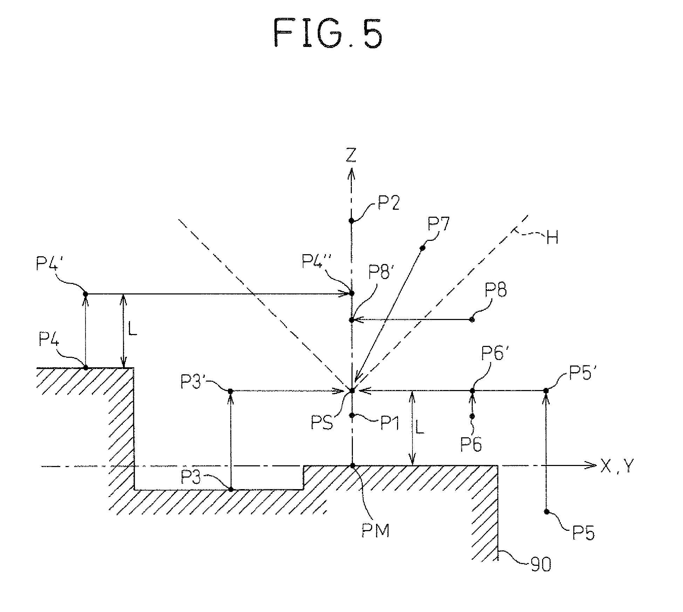

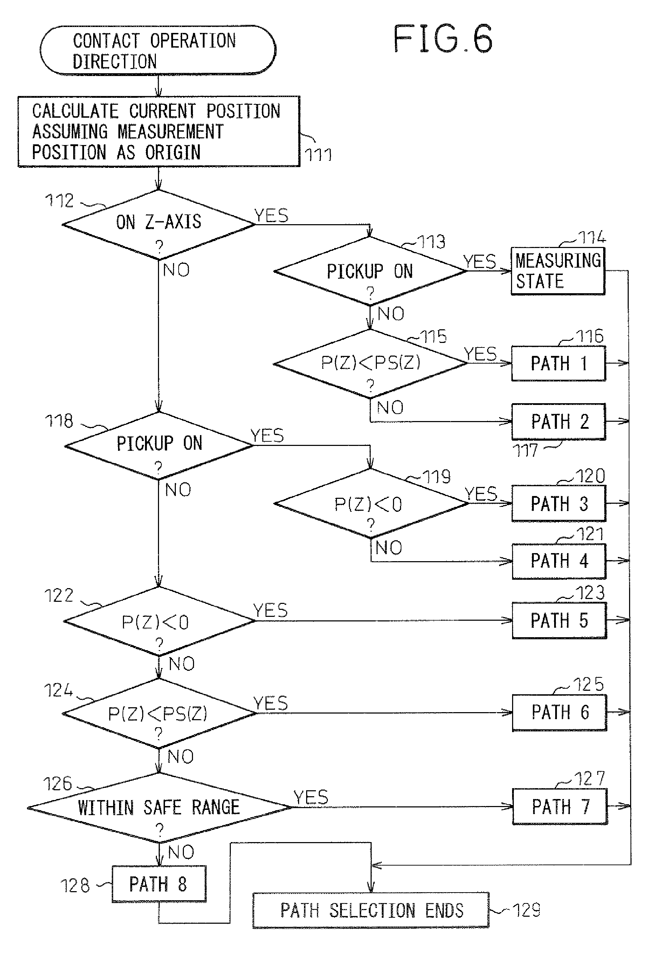

Fig.5 is a diagram for explaining processing for determining the movement path and speed of the contact probe and Fig.6 is a flow chart showing processing for determining the movement path and speed of the contact probe. The generation of the movement path and the determination of the movement speed of the contact probe are explained below using Fig.5 and Fig.6.

Fig.5 is a diagram showing a sectional view of a work 90 and, here, the movement in the plane of the figure is explained as an example. However, it is also possible to combine the movement in the transverse direction with the movement in the direction perpendicular to the plane of the paper. Symbol PM is a position with which the contact probe is caused to come into contact on the surface of the work 90, that is, the measurement position. The measurement direction of the pickup is the direction perpendicular to the surface. Here, a rectangular coordinate system with the measurement position PM being the origin is defined and the measurement direction (direction perpendicular to the surface) of the pickup is assumed to be the Z-axis direction. The transverse direction is the X-axis or Y-axis direction.

L is a safe distance and a position the safe distance L upwardly away from the measurement position PM is assumed to be a reference position PS. Within the range of a cone with the reference position PS being the vertex and the straight line passing through the reference position PS in the Z-axis direction being the axis is a safe region H. In the safe region H, there exists no work surface and the contact probe is unlikely to collide with the work, therefore, it is a region in which the pickup can freely move. In the present embodiment, an example is shown, in which the angle formed by the Z-axis and the slant line of the safe region H is 45 degrees, however, the angle can be set arbitrarily.

When the contact probe is caused to come into contact with the measurement position PM, the contact probe moves to the reference position PS and, then, it moves along the Z-axis at low speed, and is stopped after the contact probe coming into contact with the work surface is detected. In the present embodiment, the distance between the measurement position PM and the reference position PS is set as the safe distance L, however, this is not limited and it is possible to set the distance between the measurement position PM and the reference position PS to an arbitrary value equal to or less than the safe distance L.

As shown in Fig.6, when contact of the contact probe to the measurement position PM is directed, in step 111, the current position of the contact probe in the coordinate system with the measurement position PM being the origin is calculated. As described above, this information is obtained from the signal inputted from the measuring instrument 1 via the pickup information section 15. In step 112, whether the current position is on the Z-axis is judged. If it is on the Z-axis, processing proceeds to step 113 and whether the pickup is in a measuring state (on state), that is, whether the contact probe is in contact with the work is judged. If the pickup is in the on state, the contact probe is in a state of being in contact with the measurement position PM of the work, that is, in a measuring state 114, therefore, processing proceeds to step 129 and the path selection processing is ended. If the pickup is not in the on state, processing proceeds to step 115 and whether a Z coordinate value P (Z) of the current position of the contact probe is smaller than a Z coordinate value PS (Z) of the reference position PS is judged. If P (Z) is smaller than PS (Z), the current position of the contact probe is between PM and PS in Fig.5, for example, at a position P1, then a path 1 in step 116 is selected and processing proceeds to step 129. The path 1 is a path for the movement from the current position to PM at low speed. If P (Z) is greater than PS (Z), the current position of the contact probe is at a position above PS on the Z-axis in Fig.5, for example, at a position P2, then a path 2 in step 117 is selected and processing proceeds to step 129. The path 2 is a path for the movement from PS toward PM at low speed after the movement from the current position to PS at high speed.

In step 112, when it is judged that the current position is not on the Z-axis, processing proceeds to step 118 and whether the pickup is in the on state is judged. If the pickup is in the on state, processing proceeds to step 119 and whether P (Z) is smaller than the Z coordinate of the measurement position PM, that is, whether it is negative, is judged. If P (Z) is negative, the current position of the contact probe is, for example, a position P3 in Fig.5, then a path 3 in step 120 is selected and processing proceeds to step 129. The path 3 is a path for the movement to PS and further to PM after ascending from the current position to the position of the Z coordinate value of the reference position PS, that is, a position P3'. On this path, movement is performed at high speed from P3 to PS and the movement from PS to PM is performed at low speed.

In step 119, if P (Z) is judged to be positive, the current position of the contact probe is, for example, a position P4 in Fig.5, then a path 4 in step 121 is selected and processing proceeds to step 129. The path 4 is a path for the movement to a position P4'' on the Z-axis and the movement from P4" to PS and PM after the ascent to a position the safe distance L upward from the current position, that is, a position P4'. On this path, movement is performed at high speed from P4 to PS and the movement from PS to PM is performed at low speed.

When it is judged that the pickup is not in the on state in step 118, processing proceeds to step 122 and whether P (Z) is negative is judged. When P (Z) is negative, the current position of the contact probe is, for example, a position P5 in Fig.5, then a path 5 in step 123 is selected and processing proceeds to step 129. The path 5 is a path for the movement to PS and further to PM after the ascent from the current position to a position of the Z-axis coordinate value of the reference position PS, that is, a position P5'. On this path, movement is performed at high speed from P5 to PS and the movement from PS to PM is performed at low speed.

When it is judged that P (Z) is positive in step 122, processing further proceeds to step 124 and whether P (Z) is smaller than PS (Z) is judged. When P (Z) is smaller than PS (Z), the current position of the contact probe is, for example, a position P6 in Fig.5, then a path 6 is selected in step 123 and processing proceeds to step 129. The path 6 is a path for the movement to PS and further to PM after the ascent from the current position to a position of the Z-axis coordinate value of the reference position PS, that is, a position P6'. On this path, movement is performed at high speed from P6 to PS and the movement from PS to PM is performed at low speed.

When it is judged that P (Z) is greater than PS (Z) in step 124, processing further proceeds to step 126 and whether the current position is within the safe region is judged. When within the safe region, the current position of the contact probe is, for example, a position P7, then a path 7 is selected in step 127 and processing proceeds to step 129. The path 7 is a path for further movement to PM at low speed after the movement from the current position to the reference position PS along a straight line at high speed.

When it is judged that the current position is not within the safe region in step 126, the current position of the contact probe is, for example, a position P8 in Fig.5, then a path 8 is selected in step 128 and processing proceeds to step 129. The path 8 is a path for the movement from the current position to a position P8' on the Z-axis and the movement to PM from P8' through PS, On this path, movement is performed at high speed from P8 to PS and the movement from PS to PM is performed at low speed.

As described above, in the present embodiment, when the current position is on the Z-axis, the contact position PM is touched without any other action. When the current position is not on the Z-axis, after the ascent at least to the same height as the reference position PS, movement onto the Z-axis is performed, then the contact position PM is touched without any other action. If the pickup is in the on state and the current position is higher than the contact position PM, that is, the Z coordinate of the current position is positive, the movement at the height of the reference position PS is not sufficient in terms of safety, therefore, ascent to a position the safe distance L upward from the current position is made. Therefore, the Z coordinate at this time is greater than the Z coordinate of the reference position PS. Then, the movement onto the Z-axis is performed. After this, the same operation as that on the Z-axis is performed. On the movement path, the movement from PS to PM is performed at low speed while monitoring the detected signal of the pickup and on the rest of the path, movement is performed at high speed.

In other words, in the present embodiment, the downward movement in the Z-axis direction occurs only from PS to PM and within the safe region. The movement in the safe region has no possibility of collision and, therefore, it is possible to move at high speed. Further, the upward movement in the Z-axis direction has no possibility of collision because the movement is in the departing direction from the work and, therefore, it is possible to move at high speed. Furthermore, the movement in the direction perpendicular to the Z-axis is performed at a position higher than at least the reference position, therefore, it is possible to move at high speed. As described above, in the present embodiment, the movement from PS to PM is performed at low speed and the movement in other cases is performed at high speed.

It may also be possible to reduce the speed of the movement from the reference position PS to the contact position PM to a minimum, increase the speed of the movement on the path outside the safe region and, further, to increase the speed of the movement on the path within the safe region.

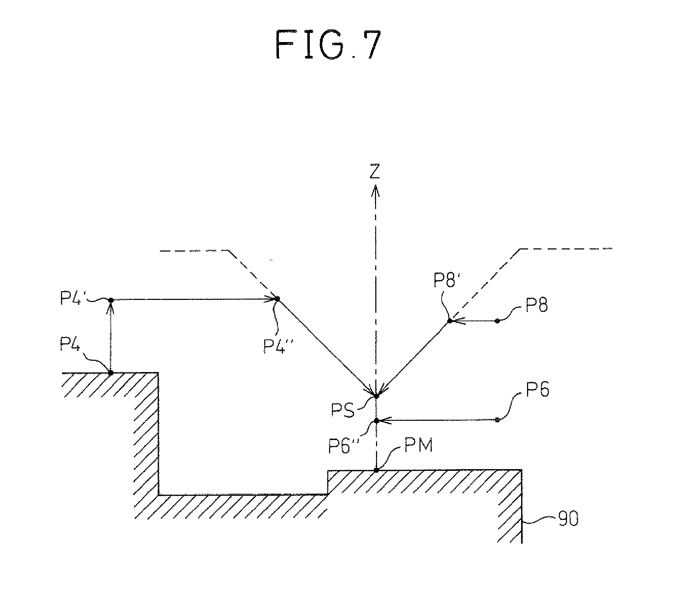

There can be various modification examples for the generation of the movement path and some of them are explained with reference to Fig.7. On the path 4 described above, after the ascent to P4', the movement to the position P4" on the Z-axis is performed, however, this can be modified into one in which the horizontal movement from the position P4' is performed until the safe region H is entered, that is, the movement is performed until P4''' is reached, then, the movement from P4"' to PS is performed along a straight line. This modification example is possible similarly for the path 8.

On the path 6 described above, after the temporarily ascent from the current position to the position P6' at the same height as that of the reference position PS, the movement to PS is performed, however, this can be modified into one in which the movement from the current position to a position P6'' on the Z-axis is performed while the same height, from the current position, is being maintained. This is a path in the case where P6 is not at a position at which the pickup is not on and it can be assumed that there is no work present in the vicinity thereof and there is no possibility of collision with the work.

Further, the safe region can be set arbitrarily and, as shown in Fig.7, it may be possible to set the region above a predetermined height as an additional safe region to the range of the cone in Fig.5.

Due to the present invention, the workability of the surface roughness/contour profile measuring instrument is improved and, therefore, the use of the surface roughness/contour profile measuring instrument is made possible in the field in which the use of the surface roughness/contour profile measuring instrument has not been possible from the standpoint of productivity, and the field of use of the surface roughness/contour profile measuring instrument is enlarged.

## Claims

1. A surface roughness/contour profile measuring instrument comprising:
a pickup for detecting the height of a surface position of a work; and
a pickup moving mechanism for relatively moving the pickup with respect to the work, and measuring the roughness or form of the surface of the work by detecting the change in the height of the surface position of the work when relatively moving the pickup with respect to the surface of the work, further comprising:
a movement information generation section for generating movement information necessary to move the pickup from the current position to a measurement directed position for detecting the height of the directed surface position of the work surface; and
a movement control section for relatively moving the pickup with respect to the work based on the movement information generated by the movement information generation section.

2. The surface roughness/contour profile measuring instrument as set forth in claim 1, wherein
the movement information generation section comprises:
a movement path generation section for generating a path for the movement from the current position to the measurement directed position; and
a movement speed information generation section for determining the speed at the time of the movement on the path generated by the movement path generation section.

3. The instrument as set forth in claim 1 or claim 2, wherein the movement path generation section generates the path based on:
the measurement directed position;
the detection direction of the pickup;
the current position of the pickup;
information as to whether the pickup is in a measuring state;
a safe distance set in advance; and
information as to a safe range set in advance.

4. The instrument as set forth in any of the preceding claims, wherein the movement path generation section generates a path for the movement to the measurement directed position after the movement from the measurement directed position to a position on a straight line extending in the detection direction of the pickup.

5. The instrument as set forth in any of the preceding claims, wherein the movement path generation section generates the path such that the pickup passes through the reference position the safe distance away from the measurement directed position in the detection direction of the pickup.

6. The instrument as set forth in any of the preceding claims, wherein the movement path generation section generates the path such that the pickup moves to the reference position after ascending to the height of the reference position when the current position of the pickup is lower than the reference position in the detection direction of the pickup.

7. The instrument as set forth in any of claims 1 to 5, wherein the movement path generation section generates the path such that the pickup moves to the reference position after ascending to the safe distance in the detection direction of the pickup when the pickup is in the measuring state.

8. The surface roughness/contour profile measuring instrument as set forth in claim 3, wherein the safe range is a cone with the reference position being the vertex and the detection direction of the pickup being the axis.

9. The surface roughness/contour profile measuring instrument as set forth in claim 3 or 8, wherein the movement path generation section generates the path such that the pickup moves to the reference position along a straight line in the safe range.

10. The surface roughness/contour profile measuring instrument as set forth in claim any one of claims 5 to 7, wherein the movement speed information generation section sets the movement speed of the pickup to low speed on the path for the movement from the reference position to the measurement directed position and to high speed on the rest of the path.
